# EUROPEAN PATENT SPECIFICATION

(11) **EP 3 496 958 B1**
(45) Date of publication and mention of the grant of the patent: **09.06.2021**
(21) Application number: 17840047.9
(22) Date of filing: 03.08.2017
(51) Int. Cl.: B60C 11/12

(54) **APPARATUSES AND METHODS FOR IMPROVING CHUNKING AND CRACKING RESISTANCE OF TIRES**
VORRICHTUNGEN UND VERFAHREN ZUR VERBESSERUNG DER BRUCH- UND RISSBESTÄNDIGKEIT VON REIFEN
APPAREILS ET PROCÉDÉS POUR AMÉLIORER LA RÉSISTANCE À LA FRAGMENTATION ET À LA FISSURATION DE PNEUS

(30) Priority: 08.08.2016 US 201662371921 P
(43) Date of publication of application: 19.06.2019
(73) Proprietor: Bridgestone Bandag, LLC, Muscatine, IA 52761 (US)
(72) Inventor: CERNY, Andrew D., Riverside, Iowa 52327 (US); WESTAWAY, Terry A., Conesville, Iowa 52739 (US); OTTING, Robert G., Illinois City, Illinois 61259 (US); NIETZEL, Kimberlee C., Muscatine, Iowa 52761 (US); JENSEN, Susan M., Muscatine, Iowa 52761 (US)
(74) Representative: Oxley, Robin John George
(86) International application number: PCT/US2017/045313
(87) International publication number: WO 2018/031368

(56) References cited:
- WO-A1-2015/082310
- WO-A1-2015/082310
- WO-A1-2015/091333
- WO-A1-2015/094830
- JP-A- 2007 099 024
- JP-A- 2009 090 859
- US-A1- 2011 162 770
- US-A1- 2015 224 828

## Description

### Field

This application generally to apparatuses and methods of improving chunking and cracking resistance of tires.

### Background of the Disclosure

Sipes are sometimes cut or molded into tread to improve traction. Sipes may be formed in ribs and blocks of a tread and may exhibit the effect of cutting through water films on road surfaces, similar to edges of grooves. Sipes may also facilitate deformation of ribs and blocks, and may inhibit tire hysteresis loss. A sipe pattern can be within one or more blocks, ribs or lugs of the tire tread and included within the boundary of each tread element. Sipes may be cut straight across the tire tread, or at a constant a bias angle within tread elements. Sipes may weaken the tread blocks, and make them more susceptible to tearing or chunking off pieces of rubber. This may cause some tearing and chipping to occur at the edges of the tread blocks when the tire is subjected to side scrub. Attention is drawn to the disclosure of WO2015/091333A1, JP2009090859A and WO2015/082310A1.

### Brief Summary

Some embodiments relate to methods and apparatus for increasing chunking and cracking resistance of tire treads, and more particularly, apparatus and methods in which chevron or offset chevron shaped sipes are provided on a tire tread causing significant increase in chunking and cracking resistance of the tire tread.

A first aspect of the present invention provides a tire as claimed in claim 1.

A second aspect of the present invention provides a tread pattern for a tire tread as claimed in claim 7.

A third aspect of the present invention provides a method of increasing chunking and cracking resistance of a tire tread of a tire as claimed in claim 13.

### Brief Description of the Drawings

The foregoing and other features will become more fully apparent from the following description and appended claims, taken in conjunction with the accompanying drawings.
FIG. 1 is a front view of a portion of a tire tread including chevron shaped sipes, according to some embodiments.
FIG. 2 is a side cross-section view of a tread element of the tire tread of FIG. 1.
FIG. 3 is a front view of a portion of a tire tread including offset chevron shaped sipes, according to some embodiments.
FIG. 4 is a front view of a portion of a tire tread including offset chevron shaped sipes, according to some embodiments.
FIG. 5 is a front view of a portion of a tire tread including chevron shaped sipes, according to some embodiments.
FIG. 6 is a schematic flow diagram of an example method for increasing chunking and cracking resistance of a tire tread, according to some embodiments.

Reference is made to the accompanying drawings throughout the following detailed description. In the drawings, similar symbols typically identify similar components, unless context dictates otherwise. The illustrative implementations described in the detailed 10089446-1Section 1 description, drawings, and claims are not meant to be limiting. Other implementations may be utilized, and other changes may be made, without departing from the scope of the invention as defined in the appended claims. It will be readily understood that the aspects of the present disclosure, as generally described herein, and illustrated in the figures, can be arranged, substituted, combined, and designed in a wide variety of different configurations, all of which are explicitly contemplated and made part of this disclosure within the scope of the appended claims.

### Detailed Description

Some embodiments relate to methods and apparatus for increasing resistance of tire treads to chunking and cracking, and more particularly, apparatus and methods in which chevron or offset chevron shaped sipe pattern is provided on a tire tread causing significant increase in chunking and cracking resistance of the tire tread.

For ease of understanding this disclosure the following terms are disclosed:

"Aspect ratio" of the tire may refer to the ratio of its section height (SH) to its section width (Sw) multiplied by 100% for expression as a percentage.

"Asymmetric tread" may refer to a tread that has a tread pattern not symmetrical about the centerplane or an equatorial plane EP of the tire.

"Axial" and "axially" may refer to lines or directions that are parallel to an axis of rotation of the tire.

"Circumferential" may refer to lines or directions extending along the perimeter of the surface of the annular tire tread perpendicular to an axial direction.

"Groove" may refer to an elongated void area in a tire tread that may extend circumferentially or laterally about the tire tread in a straight, curved, zigzag or any other suitable manner. Circumferentially and laterally extending grooves may sometimes have common portions. The "groove width" may be equal to a tread surface area occupied by a groove or groove portion, thus, the groove width may be its average width over its length. Grooves may be of varying depths in a tire. The depth of a groove may vary around the circumference of the tread, or the depth of one groove may be constant but vary from the depth of another groove in the tire. In some embodiments, the depth of the groove may be constant along the tire. If such narrow or wide grooves are of substantially reduced depth as compared to wide circumferential grooves which they interconnect, they may be regarded as forming "tie bars" tending to maintain a rib-like character in the tread region involved.

"Net-to-gross ratio" may refer to the total area of ground contacting tread elements between the lateral edges around the entire circumference of the tread divided by the gross area of the entire tread between the lateral edges.

"Non-directional tread" may refer to a tread that has no preferred direction of forward travel and is not required to be positioned on a vehicle in a specific wheel position or positions to ensure that the tread pattern is aligned with the preferred direction of travel. Conversely, a directional tread pattern may have a preferred direction of travel requiring specific wheel positioning.

"Radial" and "radially" may refer to directions radially toward or away from the axis of rotation of the tire.

"Rib" may refer to a circumferentially extending strip of rubber on the tread with at least one circumferential groove and either a second such groove or a lateral edge, the strip being laterally undivided by full-depth grooves.

"Sipe" may refer to small slots molded or cut into the tread elements of the tire that subdivide the tread surface and may improve traction.

"Tread element" or "traction element" may refer to a rib, lug or a block element.

"Lugs" may refer to the section of the tread element that make contact with a surface.

"Voids" may refer to spaces that are located between the lugs.

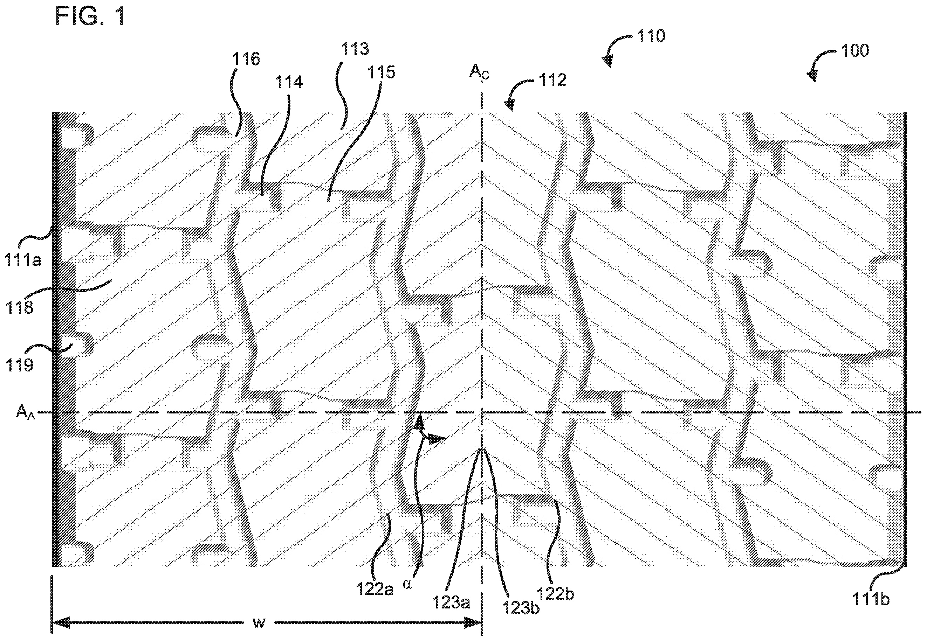

FIG. 1 is a front view of a portion of a tire tread 100 of a tire, according to some embodiments. The tire may include a pneumatic tire. The tire tread 100 may include a rotational axis and a tread pattern 110. Specifically, the tire tread 100 may include a plurality of tread elements 112 positioned on a surface of the tire tread 100 that provide the tread pattern 110. The tire tread 100 may be molded with the tire, or molded separately and thereafter coupled to an outer surface of the tire (e.g., via an adhesive, curing, fusion bonding, heat bonding, etc.).

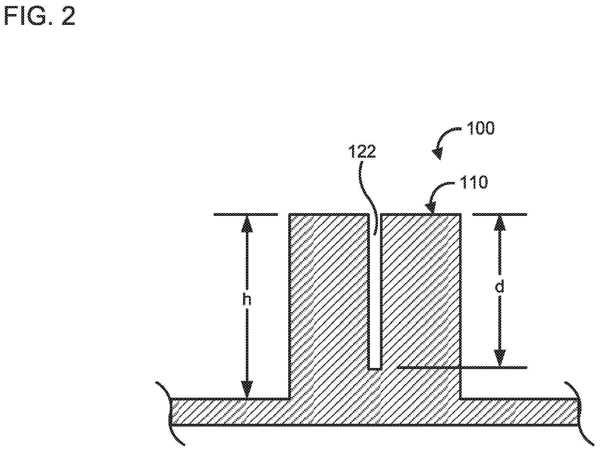

The plurality of tread elements 112 may include a plurality of circumferential lugs 113 separated by voids 114. A connecting block 115 may be positioned in the void 114 between each of the lugs 113, and coupled to each of the adjacent lugs 113. FIG. 2 is a side cross-section view of a portion of the tire tread 100 including single tread element 112. As seen in FIG. 2, each tread element has a height "h". A height of each of the connecting block 115 may be smaller than the height h of the tread elements 112 such that the connecting blocks 115 do not contact the surface on which the tire tread 100 is positioned. Furthermore, the tire tread 100 may have a half width "w" (FIG. 1) measured from a circumferential axis A_{C} of the tire tread 100 to an axial end thereof.

A plurality of circumferential grooves 116 may be provided between each of the plurality of tread elements 113. The tread elements 112 may also include shoulder blocks 118 positioned at axial ends of the tire tread 110. A plurality of notches 119 or slots may be provided in the shoulder blocks 118.

It is to be appreciated that while the tire tread 100 is shown as having a particular tread pattern 110, the tire tread 100 may have any suitable tread pattern. For example, the plurality of tread elements 112 may be axially or circumferentially positioned on a surface of the tire tread 100, include straight, curved or zig zag grooves, a pitch pattern, a non-directional tread pattern, a symmetric tread or an asymmetric tread. Furthermore, the tire tread 100 may have any suitable aspect ratio or net-to-gross ratio.

The tire tread 100 may include a first set of sipes 122a extending from the circumferential axis of the tire tread 100 towards a first axial end 111a of the tire tread 100 at a non-zero angle α with respect to an axial axis A_{A} of the tire tread 100 (e.g., in the range of about 5 - 40 degrees inclusive of all ranges and values therebetween). The tire tread 100 may also include a second set of sipes 122b extending from the circumferential axis A_{C} towards a second axial end 111b of the tire tread 100 opposite the first axial end. Each of the second set of sipes 122b may be inclined at the non-zero angle α with respect to the axial axis A_{A}. The first set of sipes 122a and the second set of sipes 122b (collectively referred to herein as "the sipes 122") may be molded into the tire tread 100, for example during a molding operation of the tire tread 100, or cut into the tread elements 112 after molding of the tire tread 100. Moreover, the sipes 122 may be inclined towards a direction of rotation of the tire tread 100 or away from the direction of rotation.

Each sipe included in the first set of sipes 122a and the second set of sipes 122b, respectively may be positioned parallel to an adjacent sipe at any suitable pitch or distance therefrom. In some embodiments, the distance may be in a range of 5 mm to 40 mm inclusive of all ranges and values therebetween. Furthermore, the distance or pitch may be fixed or variable.

A first sipe end 123a of each of the first set of sipes 122a may be positioned proximate to a second sipe end 123b of each of the second set of sipes 122b. For example, the first sipe end 123a and the second sipe end 123b of each of the first set of sipes 122a and the second set of sipes 122b, respectively may intersect the circumferential axis A_{C}. In some embodiments, the first sipe end 123a and the second sipe end 123b may intersect each other such that the combination of the sipes 122 may comprise a chevron shape, as shown for example in FIG. 1. In some embodiments, the first sipe end 123a and the second sipe end 123b may be offset from each other so that the combination of each of the sipes 122 comprise an offset chevron shape.

Each of the sipes 122 extends beyond 50% of a half width of the tire tread 100 measured from the circumferential axis A_{C}. For example, each of the sipes 122 may extend between 60% to 100% of the half width w of the tire tread 100 inclusive of all ranges and values therebetween. Furthermore, each of the sipes 122 has a sipe depth d greater than 50% of

the height h of each of the plurality of tread elements 112, measured from a top surface of the tread element 112 positioned opposite the surface of the tire tread 100 on which the tread elements 112 are positioned. For example, each of the sipes 122 may have a sipe depth d in a range of 60% to 100% of the height h of the plurality of tread elements 112 inclusive of all ranges and values therebetween. In some embodiments, each of the sipes 122 may have a sipe depth greater than 100% of the height of the plurality of tread elements (e.g., about 101% to 110% of the height h of the plurality of tread elements 112 inclusive of all ranges and values therebetween).

Expanding further, in some embodiments as shown in FIG. 1, the first sipe end 123a and the second sipe end 123b of the first set of sipes 122a and the second set of sipes 122b, respectively intersect each other such that the sipes 122 provide a chevron shape. Each of the sipes 122 of the tire tread 100 of FIG. 1 may extend from the circumferential axis A_{C} at an angle α of about 35 degrees to a corresponding axial end 111a/b of the tire tread 110 so that the sipes 122 may extend to 100% of the half width of the tire tread 110. The sipes 122 may have a sipe depth d of about 60% of the height h of each tread element 112, but may be cut to have a deeper sipe depth (e.g., 60%, 70%, 80%, 90%, 100% or 110% of the height h of the tread element 112 inclusive of all ranges and values therebetween).

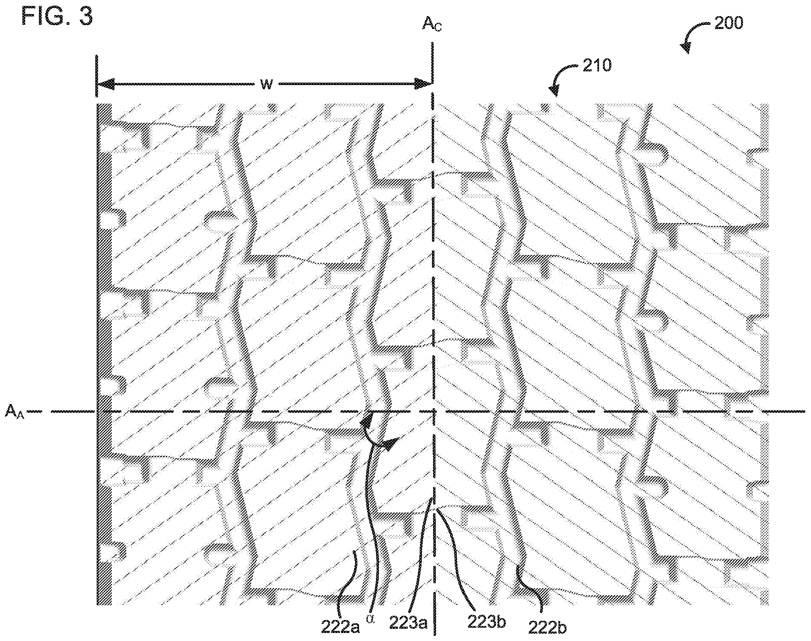

FIG. 3 is a top view of a portion of a tire tread 200 of a tire according to some embodiments. The tire tread 200 includes a tread pattern 210. The tread pattern 210 may be substantially similarly to the tread pattern 110 of the tire tread 100 and is therefore, not described in further detail herein.

A first set of sipes 222a and a second set of sipes 222b (collectively referred to herein as "the sipes 222") extend from a circumferential axis A_{C} towards opposite axial ends of the tire tread 200. For example, each of the sipes 222 may extend to 100% of a half width w of the tire tread 200, as shown in FIG. 3. Each of the second set of sipes 222b is also inclined at the non-zero angle α with respect to the axial axis A_{A}, for example at an angle of about 35 degrees. Furthermore, the sipes 222 may have any suitable sipe depth, for example in the range of 60% to 110% of a height of a plurality of tread elements of the tire tread 200, as described with respect to FIG. 1.

Each sipe included in the first set of sipes 222a and the second set of sipes 222b, respectively may be positioned parallel to an adjacent sipe at any suitable pitch or distance therefrom. In some embodiments, the distance may be in a range of 5 mm to 40 mm inclusive of all ranges and values therebetween. Furthermore, the distance or pitch may be fixed or variable.

A first sipe end 223a of each of the first set of sipes 222a may be positioned proximate to a second sipe end 223b of each of the second set of sipes 222b. For example, the first sipe end 223a and the second sipe end 223b of each of the first set of sipes 222a and the second set of sipes 222b intersect the circumferential axis A_{C}. The first sipe end 222a and the second sipe end 223b may be offset from each other so that the combination of each of the sipes 222 provides an offset chevron shape, as shown in FIG. 3.

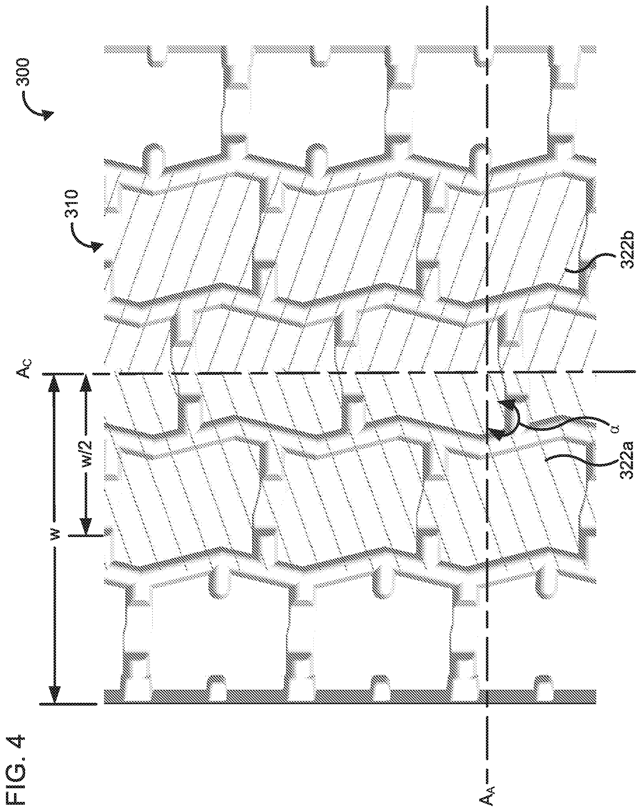

FIG. 4 is a top view of a portion of a tire tread 300 of a tire according to some embodiments. The tire tread 300 includes a tread pattern 310. The tread pattern 310 may be substantially similarly to the tread pattern 110 of the tire tread 100.

A first set of sipes 322a and a second set of sipes 322b (collectively referred to herein as "the sipes 322") extend from a circumferential axis A_{C} towards opposite axial ends of the tire tread 200, and are positioned in an offset chevron pattern. As shown in FIG. 4, each of the sipes 322 may extend greater than 50% of a half width w of the tire tread 200, for example about 60% of the half width w. Each of the second set of sipes 322b is also inclined at the non-zero angle α with respect to the axial axis A_{A}, for example an angle of about 20 degrees. Furthermore, the sipes 322 may have any suitable sipe depth, for example in the range of 60% to 110% of a height of a plurality of tread elements of the tire tread 300, such as described with respect to FIG. 1.

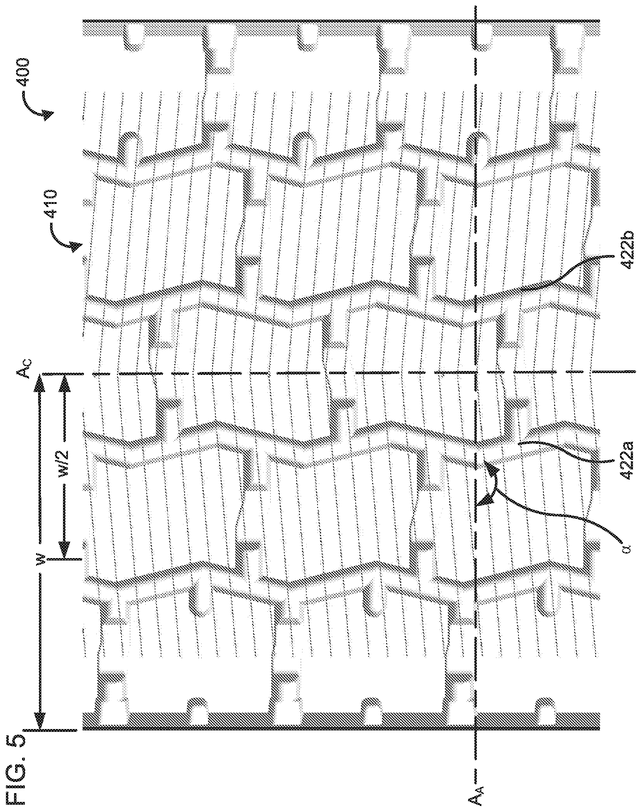

FIG. 5 is a top view of a portion of a tire tread 400 of a tire according to an embodiment. The tire tread 400 includes a tread pattern 410. The tread pattern 410 may be substantially similarly to the tread pattern 110 of the tire tread 100.

A first set of sipes 422a and a second set of sipes 422b (collectively referred to herein as "the sipes 422") extend from a circumferential axis A_{C} towards opposite axial ends of the tire tread 400, and are positioned in a chevron pattern. As shown in FIG 5, each of the sipes 422 extends greater than 50% of a half width w of the tire tread 400, for example about 80% of the half width w. Each of the second set of sipes 422b is also inclined at the non-zero angle α with respect to the axial axis A_{A}, for example an angle of about 20 degrees. Furthermore, the sipes 422 may have any suitable sipe depth, for example in the range of 60% to 110% of a height of a plurality of tread elements of the tire tread 400, such as described with respect to FIG. 1.

The chevron or offset chevron sipes described herein may significantly improve chunking or cracking resistance of the tire tread irrespective of the tire tread pattern of the tire tread. A scale of 0-5 rating points was developed to quantify chunking resistance of tires, with 0 being the worst to 5 being the best. Straight sipes, chevron shaped sipes and offset chevron sipes were cut in bus tires, and dumpster truck tires. The cracking and chunking performance of the tires was rated on the scale. Changing the sipes from straight sipes to chevron shaped or offset chevron shaped sipes resulted in an improvement in cracking and chunking resistance in a range of 0.2 rating points to as much as 1.81 rating points on the scale.

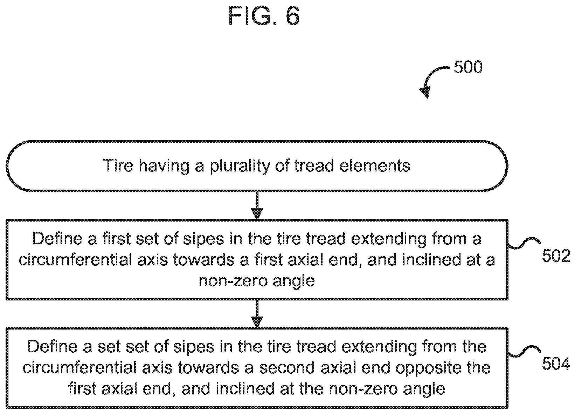

FIG. 6 is a schematic flow diagram of an example method 500 for improving chunking and cracking resistance of a tire tread (e.g., the tire tread 100/200/300/400) of a tire. The tire tread includes a plurality of tread elements (e.g., the tread elements 112) which provide a tread pattern (e.g., the tread pattern 110/210/310/410).

The method 500 includes defining a first set of sipes in the tire tread extending from a circumferential axis of the tire tread towards a first axial end of the tire tread at a non-zero angle with respect to an axial axis of the tire tread at 502. For example, the first set of sipes 122a/222a/322/422a may be cut in the tread elements 112/212/312/412. The non-zero angle is in the range of 5 degrees to 40 degrees.

Furthermore, a second set of sipes are provided in the tire tread extending from the circumferential axis towards a second axial end of the tire tread opposite the first axial end at the non-zero angle with respect to the axial axis at 504. For example, the second set of sipes 122b/222b/322b/422b may be cut in the tread elements 112/212/312/412. A first sipe end of each of the first set of sipes is positioned proximate to a second sipe end of each of the second set of sipes, so that the first set of sipes and the second set of sipes in combination comprise a chevron or offset chevron pattern.

Each sipe included in the first set of sipes and the second set of sipes, respectively may be positioned parallel to an adjacent sipe at any suitable pitch or distance therefrom (e.g., a range of 5 mm to 40 mm inclusive of all ranges and values therebetween. Furthermore, the distance or pitch may be fixed or variable.

Each of the first set of sipes and the second set of sipes extend beyond 50% of a half width of the tire tread measured from the circumferential axis. For example, each of the sipes may extend between 60% to 100% of the half width w of the tire tread inclusive of all ranges and values therebetween. Furthermore, each of the sipes has a sipe depth d greater than 50% of the height h of each of the plurality of tread elements, measured from a top surface of the tread element positioned opposite the surface of the tire tread on which the tread elements are positioned. For example, each of the sipes may have a sipe depth d in a range of 60% to 100% of the height h of the plurality of tread elements inclusive of all ranges and values therebetween. In some embodiments, each of the sipes may have a sipe depth greater than 100% of the height of the plurality of tread elements (e.g., about 101% to 110% of the height h of the plurality of tread elements inclusive of all ranges and values therebetween).

The use of the terms "a" and "an" and "the" and similar referents refer to both the singular and the plural, unless otherwise indicated herein or clearly contradicted by context. The terms "comprising," "having," "including," and "containing" are open-ended terms (e.g., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the subject matter and does not pose a limitation unless otherwise claimed. No language in the specification should be construed as being absolute on a scale but should only indicate relative improvement, nothing should be construed as indicating any non-claimed element as essential.

It should be noted that the term "example" as used herein to describe some embodiments is intended to indicate that some embodiments are possible examples, representations, and/or illustrations of possible embodiments (and such term is not intended to connote that some embodiments are necessarily extraordinary or superlative examples).

As used herein, the terms "about" and "approximately" generally mean plus or minus 10% of the stated value. For example, about 0.5 would include 0.45 and 0.55, about 10 would include 9 to 11, about 1000 would include 900 to 1100.

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

Preferred embodiments are described herein, including the best mode known to the inventors for carrying out the invention. as defined in the appended claims.

## Claims

1. A tire, comprising:
a tire tread (100, 200, 300, 400) with a rotational axis;
a plurality of tread elements (112) positioned on a tire tread surface so as to comprise a tread pattern (110, 210, 310, 410), the plurality of tread elements (112) positioned at least one of axially or circumferentially on the tire tread surface;
a plurality of grooves (116) provided between the plurality of tread elements (112);
a first set of sipes (122a, 222a, 322a, 422a) extending from a circumferential axis (A_{C}) of the tire tread (100, 200, 300, 400) towards a first axial end (111a) of the tire tread (100, 200, 300, 400) at a non-zero angle (α) with respect to an axial axis (A_{A}) of the tire tread (100, 200, 300, 400); and
a second set of sipes (122b, 222b, 322b, 422b) extending from the circumferential axis (A_{C}) towards a second axial end (111b) of the tire opposite the first axial end (111a) at the non-zero angle (α) with respect to the axial axis (A_{A}) such that a first sipe end (123a, 223a) of each of the first set of sipes (122a, 222a, 322a, 422a) is positioned proximate to a second sipe end (123b, 223b) of each of the second set of sipes (122b, 222b, 322b, 422b),
wherein each of the first set of sipes (122a, 222a, 322a, 422a) and the second set of sipes (122b, 222b, 322b, 422b) extend beyond 50% of a half width (w) of the tire tread (100, 200, 300, 400), the half width (w) measured from the circumferential axis (A_{C}) to one of the first axial end (111a) or the second axial end (111b), and
**characterized in that** each of the first set of sipes (122a, 222a, 322a, 422a) and the second set of sipes (122b, 222b, 322b, 422b) have a sipe depth (d) greater than 50% of a height (h) of the plurality of tread elements (112), and
the first sipe end (123a, 223a) intersects the second sipe end (123b, 223b) at the circumferential axis (A_{C}) so that the combination of each of the first set of sipes (122a, 222a, 322a, 422a) and the second set of sipes (122b, 222b, 322b, 422b) comprise a chevron shape.

2. The tire of claim 1, wherein the first sipe end (123a, 223a) and the second sipe end (123b, 223b) are offset from each other so that the combination of each of the first set of sipes (122a, 222a, 322a, 422a) and the second set of sipes (122b, 222b, 322b, 422b) comprise an offset chevron shape.

3. The tire of claim 1, wherein each of the first set of sipes (122a, 222a, 322a, 422a) and the second set of sipes (122b, 222b, 322b, 422b) extend between 60% to 100% of the half width (w) of the tire tread (100, 200, 300, 400).

4. The tire of claim 1, wherein each of the first set of sipes (122a, 222a, 322a, 422a) and the second set of sipes (122b, 222b, 322b, 422b) have a sipe depth (d) in a range of 60% to 100% of the height (h) of the plurality of tread elements (112).

5. The tire of claim 4, wherein each of the first set of sipes (122a, 222a, 322a, 422a) and the second set of sipes (122b, 222b, 322b, 422b) have a sipe depth (d) greater than 100% of the height (h) of the plurality of tread elements (112).

6. The tire of claim 1, wherein the non-zero angle (α) is in a range of 5 degrees to 40 degrees with respect to the axial axis (A_{A}).

7. A tread pattern (110, 210, 310, 410) for a tire tread (100, 200, 300, 400), comprising:
a plurality of tread elements (112) positioned on a tire tread first surface providing the tread pattern (110, 210, 310, 410), the plurality of tread elements (112) positioned at least one of axially or circumferentially on the tire tread first surface;
a plurality of grooves (116) provided between the plurality of tread elements (112);
a first set of sipes (122a, 222a, 322a, 422a) extending from a circumferential axis (Ac) of the tire tread (100, 200, 300, 400) towards a first axial end (111a) of the tire tread (100, 200, 300, 400) at a non-zero angle (α) with respect to an axial axis (A_{A}) of the tire tread (100, 200, 300, 400); and
a second set of sipes (122b, 222b, 322b, 422b) extending from the circumferential axis (A_{C}) towards a second axial end (111b) of the tire tread (100, 200, 300, 400) opposite the first axial end (111a) at the non-zero angle (α) with respect to the axial axis (A_{A}) such that a first sipe end (123a, 223a) of each of the first set of sipes (122a, 222a, 322a, 422a) is positioned proximate to a second sipe end (123b, 223b) of each of the second set of sipes (122b, 222b, 322b, 422b),
wherein each of the first set of sipes (122a, 222a, 322a, 422a) and the second set of sipes (122b, 222b, 322b, 422b) extend beyond 50% of a half width (w) of the tire, the half width (w) measured from the circumferential axis (A_{C}) to one of the first axial end (111a) or the second axial end (111b), and
**characterized in that** each of the first set of sipes (122a, 222a, 322a, 422a) and the second set of sipes (122b, 222b, 322b, 422b) have a sipe depth (d) greater than 50% of a height (h) of the plurality of tread elements (112), and
the non-zero angle (α) is in a range of 5 degrees to 40 degrees with respect to the axial axis (A_{A}).

8. The tread pattern (110, 210, 310, 410) of claim 7, wherein the first sipe end (123a, 223a) intersects the second sipe end (123b, 223b) at the circumferential axis (Ac) so that the combination of each of the first set of sipes (122a, 222a, 322a, 422a) and the second set of sipes (122b, 222b, 322b, 422b) provide a chevron shape.

9. The tread pattern (110, 210, 310, 410) of claim 7, wherein the first sipe end (123a, 223a) and the second sipe end (123b, 223b) are offset from each other so that the combination of each of the first set of sipes (122a, 222a, 322a, 422a) and the second set of sipes (122b, 222b, 322b, 422b) provide an offset chevron shape.

10. The tread pattern (110, 210, 310, 410) of claim 7, wherein each of the first set of sipes (122a, 222a, 322a, 422a) and the second set of sipes (122b, 222b, 322b, 422b) extend between 60% to 100% of the half width (w) of the tire tread (100, 200, 300, 400).

11. The tread pattern (110, 210, 310, 410) of claim 7, wherein each of the first set of sipes (122a, 222a, 322a, 422a) and the second set of sipes (122b, 222b, 322b, 422b) have a sipe depth (d) in a range of 60% to 100% of the height (h) of the plurality of tread elements (112).

12. The tread pattern (110, 210, 310, 410) of claim 11, wherein each of the first set of sipes (122a, 222a, 322a, 422a) and the second set of sipes (122b, 222b, 322b, 422b) have a sipe depth (d) greater than 100% of the height (h) of the plurality of tread elements (112).

13. A method of increasing chunking and cracking resistance of a tire tread (100, 200, 300, 400) of a tire, the tire tread (100, 200, 300, 400) comprising a plurality of tread elements (112), the method comprising:
forming a first set of sipes (122a, 222a, 322a, 422a) in the tire tread (100, 200, 300, 400) extending from a circumferential axis (A_{C}) of the tire tread (100, 200, 300, 400) towards a first axial end (111a) of the tire tread (100, 200, 300, 400) at a non-zero angle (α) with respect to an axial axis (A_{A}) of the tire tread (100, 200, 300, 400); and
forming a second set of sipes (122b, 222b, 322b, 422b) in the tire tread (100, 200, 300, 400) extending from the circumferential axis (A_{C}) towards a second axial end (111b) of the tire tread (100, 200, 300, 400) opposite the first axial end (111a) at the non-zero angle (α) with respect to the axial axis (A_{A}) such that a first sipe end (123a, 223a) of each of the first set of sipes (122a, 222a, 322a, 422a) is positioned proximate to a second sipe end (123b, 223b) of each of the second set of sipes (122b, 222b, 322b, 422b),
wherein each of the first set of sipes (122a, 222a, 322a, 422a) and the second set of sipes (122b, 222b, 322b, 422b) extend beyond 50% of a half width (w) of the tire tread (100, 200, 300, 400), the half width (w) measured from the circumferential axis (A_{C}) to one of the first axial end (111a) or the second axial end (111b), and
**characterized in that** each of the first set of sipes (122a, 222a, 322a, 422a) and the second set of sipes (122b, 222b, 322b, 422b) have a sipe depth (d) greater than 50% of a height (h) of the plurality of tread elements (112), and
the first sipe end (123a, 223a) intersects the second sipe end (123b, 223b) at the circumferential axis (A_{C}) so that the combination of each of the first set of sipes (122a, 222a, 322a, 422a) and the second set of sipes (122b, 222b, 322b, 422b) comprise a chevron shape.

## Patentansprüche

1. Reifen, umfassend:
eine Reifenlauffläche (100, 200, 300, 400) mit einer Rotationsachse;
eine Vielzahl von Laufflächenelementen (112), die auf einer Reifenlauffläche so positioniert sind, dass sie ein Laufflächenprofil (110, 210, 310, 410) umfassen, wobei die Vielzahl von Laufflächenelementen (112) axial und/oder in Umfangsrichtung auf der Reifenlauffläche positioniert ist;
eine Vielzahl von Rillen (116), die zwischen der Vielzahl von Laufflächenelementen (112) bereitgestellt sind;
einen ersten Satz von Lamellen (122a, 222a, 322a, 422a), die sich von einer Umfangsachse (Ac) der Reifenlauffläche (100, 200, 300, 400) in Richtung eines ersten axialen Endes (111a) der Reifenlauffläche (100, 200, 300, 400) in einem Winkel (α) ungleich null in Bezug auf eine axiale Achse (A_{A}) der Reifenlauffläche (100, 200, 300, 400) erstrecken; und
einen zweiten Satz von Lamellen (122b, 222b, 322b, 422b), die sich von der Umfangsachse (A_{C}) zu einem zweiten axialen Ende (111b) des Reifens gegenüber dem ersten axialen Ende (111a) in dem Winkel (α) ungleich null in Bezug auf die axiale Achse (A_{A}) erstrecken, so dass ein erstes Lamellenende (123a, 223a) von jedem des ersten Satzes von Lamellen (122a, 222a, 322a, 422a) in der Nähe eines zweiten Lamellenendes (123b, 223b) von jedem des zweiten Satzes von Lamellen (122b, 222b, 322b, 422b) positioniert ist,
wobei sich jeder des ersten Satzes von Lamellen (122a, 222a, 322a, 422a) und des zweiten Satzes von Lamellen (122b, 222b, 322b, 422b) über 50 % einer halben Breite (w) der Reifenlauffläche (100, 200, 300, 400) hinaus erstreckt, wobei die halbe Breite (w) von der Umfangsachse (Ac) zu dem ersten axialen Ende (111a) und/oder dem zweiten axialen Ende (111b) gemessen wird, und
**dadurch gekennzeichnet, dass** jeder des ersten Satzes von Lamellen (122a, 222a, 322a, 422a) und des zweiten Satzes von Lamellen (122b, 222b, 322b, 422b) eine Lamellentiefe (d) aufweist, die größer als 50 % einer Höhe (h) der Vielzahl von Laufflächenelementen (112) ist, und
das erste Lamellenende (123a, 223a) das zweite Lamellenende (123b, 223b) an der Umfangsachse (Ac) schneidet, so dass die Kombination von jedem des ersten Satzes von Lamellen (122a, 222a, 322a, 422a) und des zweiten Satzes von Lamellen (122b, 222b, 322b, 422b) eine Zickzackform umfasst.

2. Reifen nach Anspruch 1, wobei das erste Lamellenende (123a, 223a) und das zweite Lamellenende (123b, 223b) voneinander versetzt sind, so dass die Kombination von jedem des ersten Satzes von Lamellen (122a, 222a, 322a, 422a) und des zweiten Satzes von Lamellen (122b, 222b, 322b, 422b) eine versetzte Zickzackform umfasst.

3. Reifen nach Anspruch 1, wobei sich jeder des ersten Satzes von Lamellen (122a, 222a, 322a, 422a) und des zweiten Satzes von Lamellen (122b, 222b, 322b, 422b) zwischen 60 % bis 100 % der halben Breite (w) der Reifenlauffläche (100, 200, 300, 400) erstreckt.

4. Reifen nach Anspruch 1, wobei jeder des ersten Satzes von Lamellen (122a, 222a, 322a, 422a) und des zweiten Satzes von Lamellen (122b, 222b, 322b, 422b) eine Lamellentiefe (d) in einem Bereich von 60 % bis 100 % der Höhe (h) der Vielzahl von Laufflächenelementen (112) aufweist.

5. Reifen nach Anspruch 4, wobei jeder des ersten Satzes von Lamellen (122a, 222a, 322a, 422a) und des zweiten Satzes von Lamellen (122b, 222b, 322b, 422b) eine Lamellentiefe (d) aufweist, die größer als 100 % der Höhe (h) der Vielzahl von Laufflächenelementen (112) ist.

6. Reifen nach Anspruch 1, wobei der Winkel (α) ungleich null in einem Bereich von 5 Grad bis 40 Grad in Bezug auf die axiale Achse (A_{A}) liegt.

7. Laufflächenprofil (110, 210, 310, 410) für eine Reifenlauffläche (100, 200, 300, 400), umfassend:
eine Vielzahl von Laufflächenelementen (112), die auf einer ersten Reifenlaufflächenoberfläche positioniert sind, die das Laufflächenprofil (110, 210, 310, 410) bereitstellt, wobei die Vielzahl von Laufflächenelementen (112) axial und/oder in Umfangsrichtung auf der ersten Reifenlaufflächenoberfläche positioniert ist;
eine Vielzahl von Rillen (116), die zwischen der Vielzahl von Laufflächenelementen (112) bereitgestellt sind;
einen ersten Satz von Lamellen (122a, 222a, 322a, 422a), die sich von einer Umfangsachse (Ac) der Reifenlauffläche (100, 200, 300, 400) in Richtung eines ersten axialen Endes (111a) der Reifenlauffläche (100, 200, 300, 400) in einem Winkel (α) ungleich null in Bezug auf eine axiale Achse (A_{A}) der Reifenlauffläche (100, 200, 300, 400) erstrecken; und
einen zweiten Satz von Lamellen (122b, 222b, 322b, 422b), die sich von der Umfangsachse (Ac) zu einem zweiten axialen Ende (111b) der Reifenlauffläche (100, 200, 300, 400) gegenüber dem ersten axialen Ende (111a) in dem Winkel (α) ungleich null in Bezug auf die axiale Achse (A_{A}) erstrecken, so dass ein erstes Lamellenende (123a, 223a) von jedem des ersten Satzes von Lamellen (122a, 222a, 322a, 422a) in der Nähe eines zweiten Lamellenendes (123b, 223b) von jedem des zweiten Satzes von Lamellen (122b, 222b, 322b, 422b) positioniert ist,
wobei sich jeder des ersten Satzes von Lamellen (122a, 222a, 322a, 422a) und des zweiten Satzes von Lamellen (122b, 222b, 322b, 422b) über 50 % einer halben Breite (w) des Reifens hinaus erstreckt, wobei die halbe Breite (w) von der Umfangsachse (Ac) zu einem des ersten axialen Endes (111a) oder des zweiten axialen Endes (111b) gemessen wird, und
**dadurch gekennzeichnet, dass** jeder des ersten Satzes von Lamellen (122a, 222a, 322a, 422a) und des zweiten Satzes von Lamellen (122b, 222b, 322b, 422b) eine Lamellentiefe (d) aufweist, die größer als 50 % einer Höhe (h) der Vielzahl von Laufflächenelementen (112) ist, und
der Winkel (α) ungleich null in einem Bereich von 5 Grad bis 40 Grad in Bezug auf die axiale Achse (A_{A}) liegt.

8. Laufflächenprofil (110, 210, 310, 410) nach Anspruch 7, wobei das erste Lamellenende (123a, 223a) das zweite Lamellenende (123b, 223b) an der Umfangsachse (Ac) schneidet, so dass die Kombination von jedem des ersten Satzes von Lamellen (122a, 222a, 322a, 422a) und des zweiten Satzes von Lamellen (122b, 222b, 322b, 422b) eine Zickzackform bereitstellt.

9. Laufflächenprofil (110, 210, 310, 410) nach Anspruch 7, wobei das erste Lamellenende (123a, 223a) und das zweite Lamellenende (123b, 223b) voneinander versetzt sind, so dass die Kombination von jedem des ersten Satzes von Lamellen (122a, 222a, 322a, 422a) und des zweiten Satzes von Lamellen (122b, 222b, 322b, 422b) eine versetzte Zickzackform bereitstellt.

10. Laufflächenprofil (110, 210, 310, 410) nach Anspruch 7, wobei sich jeder des ersten Satzes von Lamellen (122a, 222a, 322a, 422a) und des zweiten Satzes von Lamellen (122b, 222b, 322b, 422b) zwischen 60 % bis 100 % der halben Breite (w) der Reifenlauffläche (100, 200, 300, 400) erstreckt.

11. Laufflächenprofil (110, 210, 310, 410) nach Anspruch 7, wobei jeder des ersten Satzes von Lamellen (122a, 222a, 322a, 422a) und des zweiten Satzes von Lamellen (122b, 222b, 322b, 422b) eine Lamellentiefe (d) in einem Bereich von 60 % bis 100 % der Höhe (h) der Vielzahl von Laufflächenelementen (112) aufweist.

12. Laufflächenprofil (110, 210, 310, 410) nach Anspruch 11, wobei jeder des ersten Satzes von Lamellen (122a, 222a, 322a, 422a) und des zweiten Satzes von Lamellen (122b, 222b, 322b, 422b) eine Lamellentiefe (d) von mehr als 100 % der Höhe (h) der Vielzahl von Laufflächenelementen (112) aufweist.

13. Verfahren zum Erhöhen der Bruch-und Rissbeständigkeit einer Reifenlauffläche (100, 200, 300, 400) eines Reifens, wobei die Reifenlauffläche (100, 200, 300, 400) eine Vielzahl von
Laufflächenelementen (112) umfasst, wobei das Verfahren umfasst:
Bilden eines ersten Satzes von Lamellen (122a, 222a, 322a, 422a) in der Reifenlauffläche (100, 200, 300, 400), die sich von einer Umfangsachse (Ac) der Reifenlauffläche (100, 200, 300, 400) zu einem ersten axialen Ende (111a) der Reifenlauffläche (100, 200, 300, 400) in einem Winkel (α) ungleich null in Bezug auf eine axiale Achse (A_{A}) der Reifenlauffläche (100, 200, 300, 400) erstrecken; und
Bilden eines zweiten Satzes von Lamellen (122b, 222b, 322b, 422b) in der Reifenlauffläche (100, 200, 300, 400), die sich von der Umfangsachse (Ac) zu einem zweiten axialen Ende (111b) der Reifenlauffläche (100, 200, 300, 400) gegenüber dem ersten axialen Ende (111a) in dem Winkel (α) ungleich null in Bezug auf die axiale Achse (A_{A}) erstrecken, so dass ein erstes Lamellenende (123a, 223a) von jedem des ersten Satzes von Lamellen (122a, 222a, 322a, 422a) in der Nähe eines zweiten Lamellenendes (123b, 223b) von jedem des zweiten Satzes von Lamellen (122b, 222b, 322b, 422b) positioniert ist,
wobei sich jeder des ersten Satzes von Lamellen (122a, 222a, 322a, 422a) und des zweiten Satzes von Lamellen (122b, 222b, 322b, 422b) über 50 % einer halben Breite (w) der Reifenlauffläche (100, 200, 300, 400) hinaus erstreckt, wobei die halbe Breite (w) von der Umfangsachse (Ac) zu dem ersten axialen Ende (111a) und/oder dem zweiten axialen Ende (111b) gemessen wird, und
**dadurch gekennzeichnet, dass** jeder des ersten Satzes von Lamellen (122a, 222a, 322a, 422a) und des zweiten Satzes von Lamellen (122b, 222b, 322b, 422b) eine Lamellentiefe (d) aufweist, die größer als 50 % einer Höhe (h) der Vielzahl von Laufflächenelementen (112) ist, und
das erste Lamellenende (123a, 223a) das zweite Lamellenende (123b, 223b) an der Umfangsachse (Ac) schneidet, so dass die Kombination von jedem des ersten Satzes von Lamellen (122a, 222a, 322a, 422a) und des zweiten Satzes von Lamellen (122b, 222b, 322b, 422b) eine V-Form umfasst.

## Revendications

1. Pneu, comprenant :
une bande de roulement de pneu (100, 200, 300, 400) avec un axe de rotation ;
une pluralité d'éléments de bande de roulement (112) positionnés sur une surface de bande de roulement de pneu de façon à comprendre une sculpture de bande de roulement (110, 210, 310, 410), la pluralité d'éléments de bande de roulement (112) positionnés selon au moins l'un parmi axialement ou circonférentiellement sur la surface de bande de roulement de pneu ;
une pluralité de rainures (116) fournies entre la pluralité d'éléments de bande de roulement (112) ;
un premier ensemble de lamelles (122a, 222a, 322a, 422a) s'étendant à partir de l'axe circonférentiel (Ac) de la bande de roulement de pneu (100, 200, 300, 400) en direction d'une première extrémité axiale (111a) de la bande de roulement de pneu (100, 200, 300, 400) selon un angle (α) différent de zéro par rapport à un axe axial (A_{A}) de la bande de roulement de pneu (100, 200, 300, 400) ; et
un deuxième ensemble de lamelles (122b, 222b, 322b, 422b) s'étendant à partir de l'axe circonférentiel (Ac) en direction d'une deuxième extrémité axiale (111b) du pneu opposée à la première extrémité axiale (111a) selon l'angle (α) différent de zéro par rapport à l'axe axial (A_{A}) de telle sorte qu'une première extrémité de lamelle (123a, 223a) de chacune parmi le premier ensemble de lamelles (122a, 222a, 322a, 422a) est positionnée à proximité d'une deuxième extrémité de lamelle (123b, 223b) de chacune parmi le deuxième ensemble de lamelles (122b, 222b, 322b, 422b),
dans lequel chacune parmi le premier ensemble de lamelles (122a, 222a, 322a, 422a) et le deuxième ensemble de lamelles (122b, 222b, 322b, 422b) s'étend au-delà de 50 % d'une demi-largeur (w) de la bande de roulement de pneu (100, 200, 300, 400), la demi-largeur (w) mesurée à partir de l'axe circonférentiel (Ac) vers l'une parmi la première extrémité axiale (111a) ou la deuxième extrémité axiale (111b), et
**caractérisé en ce que** chacune parmi le premier ensemble de lamelles (122a, 222a, 322a, 422a) et le deuxième ensemble de lamelles (122b, 222b, 322b, 422b) a une profondeur de lamelle (d) supérieure à 50 % d'une hauteur (h) de la pluralité d'éléments de bande de roulement (112), et
la première extrémité de lamelle (123a, 223a) croise la deuxième extrémité de lamelle (123b, 223b) au niveau de l'axe circonférentiel (Ac) de sorte que la combinaison de chacune parmi le premier ensemble de lamelles (122a, 222a, 322a, 422a) et le deuxième ensemble de lamelles (122b, 222b, 322b, 422b) comprend une forme de chevron.

2. Pneu selon la revendication 1, dans lequel la première extrémité de lamelle (123a, 223a) et la deuxième extrémité de lamelle (123b, 223b) sont décalées l'une de l'autre de sorte que la combinaison de chacune parmi le premier ensemble de lamelles (122a, 222a, 322a, 422a) et le deuxième ensemble de lamelles (122b, 222b, 322b, 422b) comprend une forme de chevron décalé.

3. Pneu selon la revendication 1, dans lequel chacune parmi le premier ensemble de lamelles (122a, 222a, 322a, 422a) et le deuxième ensemble de lamelles (122b, 222b, 322b, 422b) s'étend entre 60 % et 100 % de la demi-largeur (w) de la bande de roulement de pneu (100, 200, 300, 400).

4. Pneu selon la revendication 1, dans lequel chacune parmi le premier ensemble de lamelles (122a, 222a, 322a, 422a) et le deuxième ensemble de lamelles (122b, 222b, 322b, 422b) a une profondeur de lamelle (d) dans une plage de 60 % à 100 % de la hauteur (h) de la pluralité d'éléments de bande de roulement (112).

5. Pneu selon la revendication 4, dans lequel chacune parmi le premier ensemble de lamelles (122a, 222a, 322a, 422a) et le deuxième ensemble de lamelles (122b, 222b, 322b, 422b) a une profondeur de lamelle (d) supérieure à 100 % de la hauteur (h) de la pluralité d'éléments de bande de roulement (112).

6. Pneu selon la revendication 1, dans lequel l'angle (α) différent de zéro est dans une plage de 5 degrés à 40 degrés par rapport à l'axe axial (A_{A}).

7. Sculpture de bande de roulement (110, 210, 310, 410) pour une bande de roulement de pneu (100, 200, 300, 400), comprenant :
une pluralité d'éléments de bande de roulement (112) positionnés sur une première surface de bande de roulement de pneu fournissant la sculpture de bande de roulement (110, 210, 310, 410), la pluralité d'éléments de bande de roulement (112) positionnés selon au moins l'un parmi axialement ou circonférentiellement sur la première surface de bande de roulement de pneu ;
une pluralité de rainures (116) fournies entre la pluralité d'éléments de bande de roulement (112) ;
un premier ensemble de lamelles (122a, 222a, 322a, 422a) s'étendant à partir de l'axe circonférentiel (Ac) de la bande de roulement de pneu (100, 200, 300, 400) en direction d'une première extrémité axiale (111a) de la bande de roulement de pneu (100, 200, 300, 400) selon un angle (α) différent de zéro par rapport à un axe axial (A_{A}) de la bande de roulement de pneu (100, 200, 300, 400) ; et
un deuxième ensemble de lamelles (122b, 222b, 322b, 422b) s'étendant à partir de l'axe circonférentiel (Ac) en direction d'une deuxième extrémité axiale (111b) de la bande de roulement de pneu (100, 200, 300, 400) opposée à la première extrémité axiale (111a) selon l'angle (α) différent de zéro par rapport à l'axe axial (A_{A}) de telle sorte qu'une première extrémité de lamelle (123a, 223a) de chacune parmi le premier ensemble de lamelles (122a, 222a, 322a, 422a) est positionnée à proximité d'une deuxième extrémité de lamelle (123b, 223b) de chacune parmi le deuxième ensemble de lamelles (122b, 222b, 322b, 422b),
dans laquelle chacune parmi le premier ensemble de lamelles (122a, 222a, 322a, 422a) et le deuxième ensemble de lamelles (122b, 222b, 322b, 422b) s'étend au-delà de 50 % d'une demi-largeur (w) du pneu, la demi-largeur (w) mesurée à partir de l'axe circonférentiel (Ac) vers l'une parmi la première extrémité axiale (111a) ou la deuxième extrémité axiale (111b), et
**caractérisée en ce que** chacune parmi le premier ensemble de lamelles (122a, 222a, 322a, 422a) et le deuxième ensemble de lamelles (122b, 222b, 322b, 422b) a une profondeur de lamelle (d) supérieure à 50 % d'une hauteur (h) de la pluralité d'éléments de bande de roulement (112), et
l'angle (α) différent de zéro est dans une plage de 5 degrés à 40 degrés par rapport à l'axe axial (A_{A}).

8. Sculpture de bande de roulement (110, 210, 310, 410) selon la revendication 7, dans laquelle la première extrémité de lamelle (123a, 223a) croise la deuxième extrémité de lamelle (123b, 223b) au niveau de l'axe circonférentiel (Ac) de sorte que la combinaison de chacune parmi le premier ensemble de lamelles (122a, 222a, 322a, 422a) et le deuxième ensemble de lamelles (122b, 222b, 322b, 422b) fournit une forme de chevron.

9. Sculpture de bande de roulement (110, 210, 310, 410) selon la revendication 7, dans laquelle la première extrémité de lamelle (123a, 223a) et la deuxième extrémité de lamelle (123b, 223b) sont décalées l'une de l'autre de sorte que la combinaison de chacune parmi le premier ensemble de lamelles (122a, 222a, 322a, 422a) et le deuxième ensemble de lamelles (122b, 222b, 322b, 422b) fournit une forme de chevron décalé.

10. Sculpture de bande de roulement (110, 210, 310, 410) selon la revendication 7, dans laquelle chacune parmi le premier ensemble de lamelles (122a, 222a, 322a, 422a) et le deuxième ensemble de lamelles (122b, 222b, 322b, 422b) s'étend entre 60 % et 100 % de la demi-largeur (w) de la bande de roulement de pneu (100, 200, 300, 400).

11. Sculpture de bande de roulement (110, 210, 310, 410) selon la revendication 7, dans laquelle chacune parmi le premier ensemble de lamelles (122a, 222a, 322a, 422a) et le deuxième ensemble de lamelles (122b, 222b, 322b, 422b) a une profondeur de lamelle (d) dans une plage de 60 % à 100 % de la hauteur (h) de la pluralité d'éléments de bande de roulement (112).

12. Sculpture de bande de roulement (110, 210, 310, 410) selon la revendication 11, dans laquelle chacune parmi le premier ensemble de lamelles (122a, 222a, 322a, 422a) et le deuxième ensemble de lamelles (122b, 222b, 322b, 422b) a une profondeur de lamelle (d) supérieure à 100 % de la hauteur (h) de la pluralité d'éléments de bande de roulement (112).

13. Procédé d'augmentation de la résistance à l'arrachement et à la fissuration d'une bande de roulement de pneu (100, 200, 300, 400) d'un pneu, la bande de roulement de pneu (100, 200, 300, 400) comprenant une pluralité d'éléments de bande de roulement (112), le procédé comprenant :
la formation d'un premier ensemble de lamelles (122a, 222a, 322a, 422a) dans la bande de roulement de pneu (100, 200, 300, 400) s'étendant à partir d'un axe circonférentiel (Ac) de la bande de roulement de pneu (100, 200, 300, 400) en direction d'une première extrémité axiale (111a) de la bande de roulement de pneu (100, 200, 300, 400) selon un angle (α) différent de zéro par rapport à un axe axial (A_{A}) de la bande de roulement de pneu (100, 200, 300, 400) ; et
la formation d'un deuxième ensemble de lamelles (122b, 222b, 322b, 422b) dans la bande de roulement de pneu (100, 200, 300, 400) s'étendant à partir de l'axe circonférentiel (Ac) en direction d'une deuxième extrémité axiale (111b) de la bande de roulement de pneu (100, 200, 300, 400) opposée à la première extrémité axiale (111a) selon l'angle (α) différent de zéro par rapport à l'axe axial (A_{A}) de telle sorte qu'une première extrémité de lamelle (123a, 223a) de chacune parmi le premier ensemble de lamelles (122a, 222a, 322a, 422a) est positionnée à proximité d'une deuxième extrémité de lamelle (123b, 223b) de chacune parmi le deuxième ensemble de lamelles (122b, 222b, 322b, 422b),
dans lequel chacune parmi le premier ensemble de lamelles (122a, 222a, 322a, 422a) et le deuxième ensemble de lamelles (122b, 222b, 322b, 422b) s'étend au-delà de 50 % d'une demi-largeur (w) de la bande de roulement de pneu (100, 200, 300, 400), la demi-largeur (w) mesurée à partir de l'axe circonférentiel (Ac) vers l'une parmi la première extrémité axiale (111a) ou la deuxième extrémité axiale (111b), et
**caractérisé en ce que** chacune parmi le premier ensemble de lamelles (122a, 222a, 322a, 422a) et le deuxième ensemble de lamelles (122b, 222b, 322b, 422b) a une profondeur de lamelle (d) supérieure à 50 % d'une hauteur (h) de la pluralité d'éléments de bande de roulement (112), et
la première extrémité de lamelle (123a, 223a) croise la deuxième extrémité de lamelle (123b, 223b) au niveau de l'axe circonférentiel (Ac) de sorte que la combinaison de chacune parmi le premier ensemble de lamelles (122a, 222a, 322a, 422a) et le deuxième ensemble de lamelles (122b, 222b, 322b, 422b) comprend une forme de chevron.
